# EUROPEAN PATENT SPECIFICATION

(11) **EP 3 948 806 B1**
(45) Date of publication and mention of the grant of the patent: **12.11.2025**
(21) Application number: 20717336.0
(22) Date of filing: 25.03.2020
(51) Int. Cl.: G07C 5/08

(54) **METHOD OF PROCESSING VEHICLE DATA FROM MULTIPLE SOURCES AND CONTROLLER THEREFOR**
VERFAHREN ZUR VERARBEITUNG VON FAHRZEUGDATEN AUS MEHREREN QUELLEN UND STEUERUNG DAFÜR
PROCÉDÉ DE TRAITEMENT DE DONNÉES DE VÉHICULE PROVENANT DE MULTIPLES SOURCES ET CONTRÔLEUR ASSOCIÉ

(30) Priority: 26.03.2019 SE 1950372
(43) Date of publication of application: 09.02.2022
(73) Proprietor: Stoneridge Electronics AB, 169 73 Solna (SE)
(72) Inventor: WENNERBLOM, Martin, 168 59 Bromma (SE)
(74) Representative: Bergenstråhle & Partners AB
(86) International application number: PCT/SE2020/050308
(87) International publication number: WO 2020/197478

(56) References cited:
- EP-A1- 1 669 940
- EP-A1- 3 229 437
- WO-A1-2018/170883
- US-A1- 2010 250 053

## Description

### TECHNICAL FIELD

The present invention relates to a method of processing vehicle data, and more particularly, to a method of processing vehicle data from multiple sources in a controller and to a controller for performing the method.

### BACKGROUND

Nowadays, vehicle architecture is based on network signals passed between Electronic Control Units (ECUs) in a vehicle and Controller Area Network (CAN) signals. These signals contain important data that is measured and passed on to other consumer ECUs in the network. In a heavy vehicle today, there is a requirement to have a digital tachograph under EU legislation. In USA an Electronic Logging Device (ELD) is required with the purpose of recording the driver's duty and vehicle speed in order to ensure the driver is compliant with the driving hours' legislation or the working time directive or similar legislation stipulated by authorities. The digital tachograph is not only costly to develop, produce, maintain but also relies on only one source of information to evaluate the speed of the vehicle. In recent amendments of the legislation, the authorities have stipulated a second source of motion, but this source has a very limited quality of the input signal and is relatively easy to tamper with.

Prior art EP3229437 A1 discloses a communication device and a method for protecting a communication system against applying unauthorized codes, while WO2018170883 A1 discloses a vehicle behavior monitoring system and method.

Some vehicle monitoring systems disclosed nowadays use various distance or speed data to monitor the performance and accuracy of certain vehicle measurement systems. However, these systems use only one source of information to evaluate the violation of driving data. US9637134 discloses a method for collecting and evaluating violation of speed and acceleration etc. The invention creates one or more databases whereby identifiable behavior or evaluative characteristics can be analyzed or categorized. The evaluation in this method can be used to predict likely future events.

To evaluate the performance of a vehicle or the violation of driving data, one consideration when designing such systems is the type of data and source of the data to be used, another consideration is whether the system is designed to detect tampering or unauthorized modifications of the vehicle data.

### SUMMARY

The invention is set out in the appended independent claims, while additional aspects of the invention are defined in the dependent claims.

It is an object of the invention to address at least some of the problems and issues outlined above. One object of the present disclosure is to provide a method and a controller for processing vehicle data from multiple sources for determining a level of manipulation of vehicle data in a vehicle.

Another object is to provide a computer program product comprising computer-readable instructions, when executed on a computer, performs a method of processing vehicle data from multiple sources for determining a level of manipulation of vehicle data in a vehicle.

The above objectives are wholly or partially met by methods and controllers according to the appended claims in accordance with the present disclosure. Features and aspects are set forth in the appended claims, in the following description, and in the annexed drawings in accordance with the present disclosure.

According to a first aspect, there is provided a method of processing vehicle data from multiple sources in a controller for determining a level of manipulation of vehicle data in a vehicle, the vehicle data has at least one property. The method comprises the steps of capturing, via an interface, the vehicle data from multiple sensors; grouping the captured vehicle data into associated groups, wherein each associated group comprises vehicle data, from multiple sensors, having at least one property in common; correlating vehicle data in each associated group with each other, wherein the data in each associated group is correlated with each other according to the common properties of the data in each group; creating, for each associated group, a first index based on the correlated vehicle data, the first index being an indicator of the correlated group of data; weighting the first indexes of each associated group, and generating a second index based on the weighted first indexes, the second index is an overall index and is representative for the level of manipulation of vehicle data, in other words, the second index is an overall index indicating the level of manipulation of vehicle data.

In an exemplary embodiment the weighting of the first indexes is dynamically based on their relevance and importance with the second overall index.

The method may according to another exemplary embodiment further comprise storing the captured data securely by encrypting and protecting the captured data with a digital signature and/or sending, via an interface, the first indexes to an external device.

In yet another exemplary embodiment the multiple sources of data may comprise two or more of: Global Navigation Satellite System GNSS, GPS, Advanced Driver Assistance System ADAS sensors, digital data, analogue data, weight, Driver behavior, image recognitions, sound, frequencies or current levels. According to a second aspect, there is provided a controller for processing vehicle data from multiple sources for determining a level of manipulation of vehicle data in a vehicle, the controller comprising a processor and a non-transitory computer-readable medium, configured to store instructions, which when executed by the processor, cause the controller to: capture, via an interface, vehicle data from multiple sensors; group the captured vehicle data into associated groups, wherein each associated group comprises vehicle data, from multiple sensors, having at least one property in common; correlate vehicle data in each associated group with each other, wherein the data in each associated group is correlated with each other according to the common properties of the data in each group; create, for each associated group, a first index based on the correlated vehicle data, the first index being an indicator of the correlated group of data; weight the first indexes of each associated group and generate a second index based on the weighted first indexes, the second index is an overall index and is representative for the level of manipulation of vehicle data, in other words, the second index is an overall index indicating the level of manipulation of vehicle data.

In an exemplary embodiment the weighting of the first indexes is dynamically based on their relevance and importance with the second overall index.

The controller may according to another exemplary embodiment is further caused to store the captured data securely by encrypting and protecting the captured data with a digital signature and/or to send, via an interface, the first indexes to an external device.

In yet another exemplary embodiment the multiple sources of data may comprise two or more of: Global Navigation Satellite System GNSS, GPS, Advanced Driver Assistance System ADAS sensors, digital data, analogue data, weight, Driver behavior, image recognitions, sound, frequencies or current levels.

According to a third aspect, there is provided a computer program product comprising computer-readable instructions, when executed on a computer, performs a method according to the above.

One advantage with the present invention mentioned above is that the determination of manipulation is much more reliable due to the quality of the vehicle data, the data source and especially the correlation between data from different sources.

### BRIEF DESCRIPTION OF THE DRAWINGS

Several aspects of the disclosure can be better understood with reference to the following drawings. In the drawings, like reference numerals designate corresponding parts throughout the several views.
Fig. 1 is an example of a method of processing vehicle data from multiple sources performed in a controller.
Fig. 2 is a schematic example of a controller for processing vehicle data from multiple sources.

### DETAILED DESCRIPTION

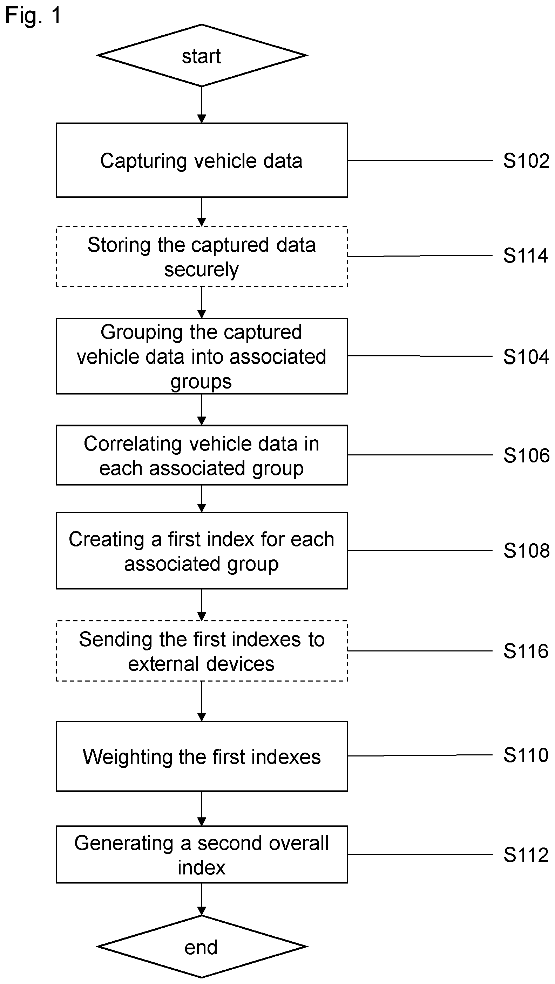

With reference to **Fig. 1** the method according to the present invention will be described in detail. At the start of the method, the controller 10 captures, at step S102, vehicle data from multiple sensors via an interface 19 . The capturing can be implemented, for example, through an electronic control Audit Unit (AU) by using CAN. In some embodiments, the multiple sources of data can be any two or more of the following sources, Global Navigation Satellite System (GNSS), Global Positioning System(GPS), digital data, analogue data, ADAS sensors, weight, driver behavior, image recognitions, sound, frequencies or current levels etc.

The captured vehicle data is grouped into associated groups at step S104. Each of the associated group comprises vehicle data having at least one property in common. The data in each associated group are correlated with each other, for example, speed data from an engine with speed data from an Anti-lock Braking System (ABS) and speed data from a gearbox sensor. It should be understood that the data is not limited only to speed data, but any type of data and any type of data sources relating to vehicle driving can be captured and associated in groups according to this invention. There can be several groups of the captured data, the groups are dynamically defined in the AU.

At step S106, the data in each associated group is correlated with each other according to the common properties of the data in each group. The correlation between the captured data can be dynamically defined in the controller 10. Then a first index is created based on the correlated vehicle data at step S108. The first index is an indicator of the correlated group of data, which can be, for example, a description of the property of the vehicle data. In a preferred embodiment, the captured vehicle data is weighted before the first index is created. In a preferred embodiment, the index is updated over time, the update period can be configured according to the user's need, in some embodiments, it is updated every one hour, every day or every week etc..

For the convenience of using the generated first indexes, in some embodiments, the first indexes are stored in the AU in a format that is downloadable to external devices over any type of connection upon request or automatically which is shown at step S116. This step is optional and therefore shown with doted lines in Fig. 1. The connection can be of any type, for example, LAN, VPN, Bluetooth, Mobile internet, USB etc., which is well-known to a person skilled in the art.

The first indexes of each associated group are weighted at step S110. A second index is generated based on the weighted first indexes at S112. In another embodiment, the second index is generated based on the weighted first indexes and the weighted data signals from different data sources. The second index is an overall index and is representative for the level of manipulation of vehicle data, in other words, the second index is an overall index indicating the level of manipulation of vehicle data. In a preferred example, the weighting of the first indexes and the data signals is based on their relevance and importance with the second overall index to ensure that the most significant signals prevail to create the overall index. The second overall index will be made available to authorities, data consumers and other stakeholders in the transport chain. To ensure the reliability of the second overall index, a public key can be provided in order to check the validity of the second overall index.

To ensure the reliability of the captured data, it is possible to provide an encryption step in the method. In a preferred embodiment, the captured vehicle data is stored securely by, for example, encrypting the data and protecting the data with a digital signature at step S114, which is an optional step.

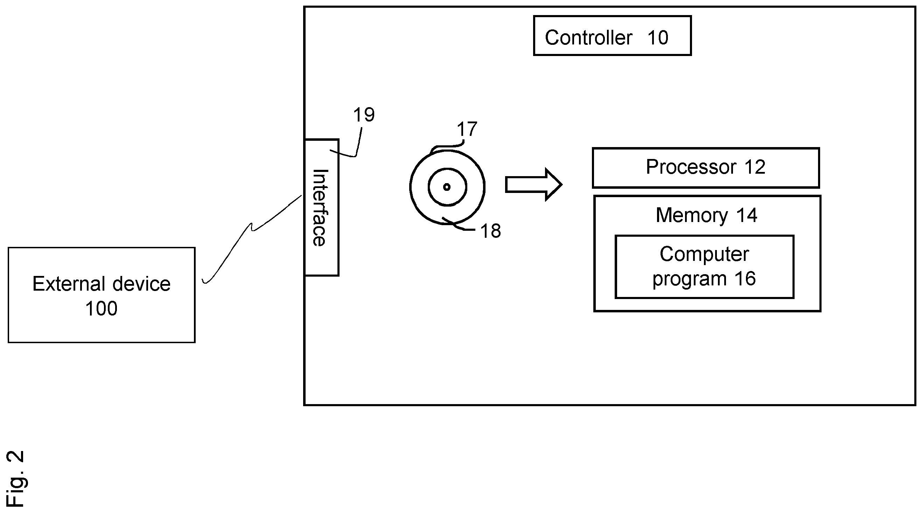

Turning now to **Fig. 2****,** the controller 10 of the present invention is schematically shown and will be described in more detail, also in conjunction with Fig. 1. The controller 10 comprises a processor 12 and a memory 14. In context of the present application the term processor 10 should be interpreted broadly as processing circuitry, which may comprise one or more programmable processor, application-specific integrated circuits, field programmable gate arrays or combinations of these (not shown) adapted to execute instructions. The memory 14 contains instructions executable by said processing circuitry, whereby the controller 10 is operative to capture data from the multiple sources. The data can be, for example, GNSS, GPS, digital data, analogue data, ADAS sensors, weight, driver behavior, image recognitions, sound, frequencies or current levels etc. The vehicle data can be captured into the electronic control AU by using CAN.

According to other embodiments, the controller 10 may further comprise an interface 19, which may be considered to comprise conventional means for communicating with the multiple sensors and external devices 100. The instructions executable by the processor 12 may be arranged as a computer program 16 stored e.g. in the memory 14. The processor 12 and the memory 14 may be arranged in a sub-arrangement. The sub-arrangement may be a micro-processor and adequate software and storage therefore, a Programmable Logic Device, PLD, or other electronic component(s)/processing circuit(s) configured to perform the methods mentioned above.

The computer program 16 may comprise computer readable code means, which when run in a controller 10 causes the controller 10 to perform the steps described above in any of the described embodiments of the vehicle data processing method. The computer program 16 may be carried by a computer program product connectable to the controller 10. The computer program product may be the memory 14. The memory 14 may be realized as for example a RAM (Random-access memory), ROM (Read-Only Memory) or an EEPROM (Electrical Erasable Programmable ROM). Further, the computer program may be carried by a separate computer-readable medium 17, such as a CD, DVD or flash memory, from which the program could be downloaded into the memory 14. Alternatively, the computer program 16 may be stored on a server or any other entity connected to the controller and has access via the interface 19. The computer program 16 may then be downloaded from the server into the memory 14.

The computer program 16, when executed by the processor 10, causes the controller 10 to capture vehicle data from multiple sensors via an interface 19, then group the captured vehicle data into associated groups, each associated group comprises vehicle data from multiple sensors having at least one property in common. The vehicle data is correlated in each associated group with each other based on the common properties. The controller 10 creates a first index based on the correlated vehicle data for each associated group. The first index is an indicator of the correlated group of data, which can be, for example, a description of the property of the vehicle data. In a preferred embodiment, the captured vehicle data is weighted before the first index is created. The first indexes of each associated group are weighted to generate a second overall index. In another embodiment, the second index is generated based on the weighted first indexes and the weighted data signals from different data sources. The weighting of the first indexes and the data signals may be based on their relevance and importance with the second overall index to ensure that the most significant signals prevail to create the overall index. The second overall index is representative for the level of manipulation of vehicle data, in other words, the second index is an overall index indicating the level of manipulation of vehicle data.

The method and controller mentioned above can be applied to any type of vehicle. As the vehicle is highly dependent on the correct data input to ensure its proper functionality, it is possible for the method and the controller in the present invention to capture these signals without any interference of the normal vehicle functions and compare them with each other to validate their correlations and qualities with the purpose of giving a measurement index of the overall signal tampering level in a specific vehicle. This does not only eliminate the weakness of having only one source of data, a dedicated encrypted speed signal from the gearbox to the digital tachograph for enforcement purposes, but also allows the owner of the vehicle and the enforcement officer to identify any tampering or malfunction in other parts of the vehicle such as i.e. emissions and speed.

Data will not only be limited to the activities of the driver and speed of the vehicle as it is today, it will also include the environmental data such as fuel quality and consumption, NOx data and other environmental aspects of the vehicle performance that is very important especially when entering environmental zones where it can also be correlated with time and location of the emission occurrence.

The AU will also record the driver's activities during the Advanced Driver Assistance Systems (ADAS) supported or managed driving in the vehicle as the data from the relevant sensors are recorded and indexed as part of the AU system.

## Claims

1. A method of processing vehicle data from multiple sources in a controller (10) for determining a level of manipulation of vehicle data in a vehicle, comprising:
capturing (S102), via an interface (19), the vehicle data from multiple sensors;
grouping (S104) the captured vehicle data into associated groups, wherein each associated group comprises vehicle data, from multiple sensors, having at least one property in common;
correlating (S106) vehicle data in each associated group with each other, wherein the data in each associated group is correlated with each other according to the common properties of the data in each group;
creating (S108), for each associated group, a first index based on the correlated vehicle data, the first index being an indicator of the correlated group of data;
weighting (S110) the first indexes of each associated group; and
generating (S112) a second overall index based on the weighted first indexes;
wherein the second overall index is an overall index indicating the level of manipulation of vehicle data.

2. The method according to claim 1, wherein the weighting of the first indexes is dynamically based on their relevance and importance with the second overall index.

3. The method according to the preceding claims, further comprising storing (S114) the captured data securely by encrypting and protecting the captured data with a digital signature.

4. The method according to any of the preceding claims, further comprising sending (S116), via an interface (19), the first indexes to an external device (100).

5. The method according to any of the preceding claims, wherein the multiple sources of data comprises two or more of: Global Navigation Satellite System GNSS, GPS, Advanced Driver Assistance System ADAS sensors, digital data, analogue data, weight, Driver behavior, image recognitions, sound, frequencies or current levels.

6. A controller (10) for processing vehicle data from multiple sources for determining a level of manipulation of vehicle data in a vehicle, the controller comprising a processor (12) and a non-transitory computer-readable medium (14), configured to store instructions (16), which when executed by the processor (12), cause the controller (10) to:
capture, via an interface (19), vehicle data from multiple sensors;
group the captured vehicle data into associated groups, wherein each associated group comprises vehicle data, from multiple sensors, having at least one property in common;
correlate vehicle data in each associated group with each other, wherein the data in each associated group is correlated with each other according to the common properties of the data in each group;
create, for each associated group, a first index based on the correlated vehicle data, the first index being an indicator of the correlated group of data;
weight the first indexes of each associated group; and
generate a second overall index based on the weighted first indexes;
wherein the second overall index is an overall index indicating the level of manipulation of vehicle data.

7. The controller according to claim 6, wherein the weighting of the first indexes is based on their relevance and importance with the second overall index.

8. The controller according to any of claims 6-7, wherein the controller (10) is further caused to store the captured data securely by encrypting and protecting the captured data with a digital signature.

9. The controller according to any of claims 6-8, wherein the controller (10) is further caused to send, via an interface (19), the first indexes to an external device (100).

10. The controller according to any of claims 6-9, wherein the multiple sources of data comprises two or more of: Global Navigation Satellite System GNSS, GPS, Advanced Driver Assistance System ADAS sensors, digital data, analogue data, weight, Driver behavior, image recognitions, sound, frequencies or current levels.

11. A computer program product comprising computer-readable instructions which, when executed on a computer, performs a method according to any of the claims 1-5.

## Patentansprüche

1. Verfahren zur Verarbeitung von Fahrzeugdaten aus mehreren Quellen in einer Steuerung (10) zur Bestimmung des Grades der Manipulation von Fahrzeugdaten in einem Fahrzeug, umfassend:
Erfassen (S102) der Fahrzeugdaten von mehreren Sensoren über eine Schnittstelle (19);
Gruppieren (S104) der erfassten Fahrzeugdaten in zugehörige Gruppen, wobei jede zugehörige Gruppe Fahrzeugdaten von mehreren Sensoren umfasst, die mindestens eine gemeinsame Eigenschaft aufweisen;
Korrelieren (S106) der Fahrzeugdaten in jeder zugehörigen Gruppe miteinander, wobei die Daten in jeder zugehörigen Gruppe miteinander entsprechend den gemeinsamen Eigenschaften der Daten in jeder Gruppe korreliert sind;
Erstellen (S108) eines ersten Index für jede zugehörige Gruppe basierend auf den korrelierten Fahrzeugdaten, wobei der erste Index ein Indikator für die korrelierte Gruppe von Daten ist;
Gewichten (S110) der ersten Indizes jeder zugehörigen Gruppe; und
Erzeugen (S112) eines zweiten Gesamtindex basierend auf den gewichteten ersten Indizes;
wobei der zweite Gesamtindex ein Gesamtindex ist, der den Grad der Manipulation von Fahrzeugdaten angibt.

2. Verfahren nach Anspruch 1, wobei die Gewichtung der ersten Indizes dynamisch auf ihrer Relevanz und Bedeutung für den zweiten Gesamtindex basiert.

3. Verfahren nach den vorstehenden Ansprüchen, weiter umfassend das sichere Speichern (S114) der erfassten Daten durch Verschlüsseln und Schützen der erfassten Daten mit einer digitalen Signatur.

4. Verfahren nach einem der vorstehenden Ansprüche, weiter umfassend das Senden (S116) der ersten Indizes über eine Schnittstelle (19) an eine externe Vorrichtung (100).

5. Verfahren nach einem der vorstehenden Ansprüche, wobei die mehreren Datenquellen zwei oder mehr umfassen von: globalem Navigationssatellitensystem GNSS, GPS, Sensoren des Fahrerassistenzsystems ADAS, digitalen Daten, analogen Daten, Gewicht, Fahrerverhalten, Bilderkennung, Ton, Frequenzen oder aktuellen Graden.

6. Steuerung (10) zur Verarbeitung von Fahrzeugdaten aus mehreren Quellen, um den Grad der Manipulation von Fahrzeugdaten in einem Fahrzeug zu bestimmen, wobei die Steuerung einen Prozessor (12) und ein nicht transitorisches, computerlesbares Medium (14) umfasst, das so konfiguriert ist, dass es Befehle (16) speichert, die, wenn sie vom Prozessor (12) ausgeführt werden, die Steuerung (10) veranlassen zum:
Erfassen von Fahrzeugdaten von mehreren Sensoren über eine Schnittstelle (19);
Gruppieren der erfassten Fahrzeugdaten in zugehörige Gruppen, wobei jede zugehörige Gruppe Fahrzeugdaten von mehreren Sensoren umfasst, die mindestens eine gemeinsame Eigenschaft aufweisen;
Korrelieren von Fahrzeugdaten in jeder zugehörigen Gruppe miteinander, wobei die Daten in jeder zugehörigen Gruppe miteinander entsprechend den gemeinsamen Eigenschaften der Daten in jeder Gruppe korreliert sind;
Erstellen, für jede zugehörige Gruppe, eines ersten Index basierend auf den korrelierten Fahrzeugdaten, wobei der erste Index ein Indikator für die korrelierte Gruppe von Daten ist;
Gewichten der ersten Indizes jeder zugehörigen Gruppe; und
Erzeugen eines zweiten Gesamtindex auf der Grundlage der gewichteten ersten Indizes;
wobei der zweite Gesamtindex ein Gesamtindex ist, der den Grad der Manipulation von Fahrzeugdaten angibt.

7. Steuerung nach Anspruch 6, wobei die Gewichtung der ersten Indizes auf ihrer Relevanz und Bedeutung für den zweiten Gesamtindex basiert.

8. Steuerung nach einem der Ansprüche 6-7, wobei die Steuerung (10) weiter dazu veranlasst wird, die erfassten Daten sicher zu speichern, indem sie die erfassten Daten verschlüsselt und mit einer digitalen Signatur schützt.

9. Steuerung nach einem der Ansprüche 6-8, wobei die Steuerung (10) weiter dazu veranlasst wird, die ersten Indizes über eine Schnittstelle (19) an eine externe Vorrichtung (100) zu senden.

10. Steuerung nach einem der Ansprüche 6-9, wobei die mehreren Datenquellen zwei oder mehr umfassen von: globalem Navigationssatellitensystem GNSS, GPS, Sensoren des Fahrerassistenzsystems ADAS, digitalen Daten, analogen Daten, Gewicht, Fahrerverhalten, Bilderkennung, Ton, Frequenzen oder aktuellen Graden.

11. Computerprogrammprodukt, das computerlesbare Anweisungen umfasst, die, wenn sie auf einem Computer ausgeführt werden, ein Verfahren nach einem der Ansprüche 1-5 durchführen.

## Revendications

1. Procédé de traitement de données de véhicule provenant de multiples sources dans un dispositif de commande (10) pour déterminer un niveau de manipulation de données de véhicule dans un véhicule, comprenant :
la capture (S102), par l'intermédiaire d'une interface (19), des données de véhicule provenant de multiples capteurs ;
le regroupement (S104) des données de véhicule capturées en groupes associés, dans lequel chaque groupe associé comprend des données de véhicule, provenant de multiples capteurs, présentant au moins une propriété en commun ;
la corrélation (S106) de données de véhicule dans chaque groupe associé les unes avec les autres, dans lequel les données dans chaque groupe associé sont corrélées les unes avec autres en fonction des propriétés communes des données dans chaque groupe ;
la création (S108), pour chaque groupe associé, d'un premier indice basé sur les données de véhicule corrélées, le premier indice étant un indicateur du groupe de données corrélé ;
la pondération (S110) des premiers indices de chaque groupe associé ; et
la génération (S112) d'un second indice global basé sur les premiers indices pondérés ;
dans lequel le second indice global est un indice global indiquant le niveau de manipulation des données du véhicule.

2. Procédé selon la revendication 1, dans lequel la pondération des premiers indices est dynamiquement basée sur leur pertinence et leur importance avec le second indice global.

3. Procédé selon les revendications précédentes, comprenant en outre le stockage (S114) des données capturées de manière sécurisée par le chiffrement et la protection des données capturées avec une signature numérique.

4. Procédé selon l'une quelconque des revendications précédentes, comprenant en outre l'envoi (S116), par le biais d'une interface (19), des premiers index à un dispositif externe (100).

5. Procédé selon l'une quelconque des revendications précédentes, dans lequel les multiples sources de données comprennent deux éléments ou plus parmi : un système de navigation globale par satellite, un GPS, des capteurs de système d'aide à la conduite avancé ADAS, des données numériques, des données analogiques, un poids, un comportement de conducteur, des reconnaissances d'image, un son, des fréquences ou des niveaux de courant.

6. Dispositif de commande (10) pour traiter des données de véhicule provenant de sources multiples pour déterminer un niveau de manipulation de données de véhicule dans un véhicule, le dispositif de commande comprenant un processeur (12) et un support lisible par ordinateur non transitoire (14), configuré pour stocker des instructions (16), qui, lorsqu'elles sont exécutées par le processeur (12), amènent le dispositif de commande (10) à :
capturer, par le biais d'une interface (19), des données de véhicule provenant de multiples capteurs ;
regrouper les données de véhicule capturées en groupes associés, dans lequel chaque groupe associé comprend des données de véhicule, provenant de multiples capteurs, présentant au moins une propriété en commun ;
corréler des données de véhicule dans chaque groupe associé les unes avec les autres, dans lequel les données dans chaque groupe associé sont corrélées les unes avec autres en fonction des propriétés communes des données dans chaque groupe ;
créer, pour chaque groupe associé, un premier indice basé sur les données de véhicule corrélées, le premier indice étant un indicateur du groupe de données corrélé ;
pondérer les premiers indices de chaque groupe associé ; et
générer un second indice global basé sur les premiers indices pondérés ;
dans lequel le second indice global est un indice global indiquant le niveau de manipulation des données du véhicule.

7. Dispositif de commande selon la revendication 6, dans lequel la pondération des premiers indices est basée sur leur pertinence et leur importance avec le second indice global.

8. Dispositif de commande selon l'une quelconque des revendications 6 à 7, dans lequel le dispositif de commande (10) est en outre amené à stocker les données capturées de manière sécurisée en chiffrant et en protégeant les données capturées avec une signature numérique.

9. Dispositif de commande selon l'une quelconque des revendications 6 à 8, dans lequel le dispositif de commande (10) est en outre amené à envoyer, par le biais d'une interface (19), les premiers indices à un dispositif externe (100).

10. Dispositif de commande selon l'une quelconque des revendications 6 à 9, dans lequel les multiples sources de données comprennent deux éléments ou plus parmi : un système de navigation globale par satellite, un GPS, des capteurs de système d'aide à la conduite avancé ADAS, des données numériques, des données analogiques, un poids, un comportement de conducteur, des reconnaissances d'image, un son, des fréquences ou des niveaux de courant.

11. Produit-programme informatique comprenant des instructions lisibles par ordinateur qui, lorsqu'elles sont exécutées sur un ordinateur, mettent en œuvre un procédé selon l'une quelconque des revendications 1 à 5.
